# EUROPEAN PATENT APPLICATION

(11) **EP 4 197 762 A1**
(43) Date of publication of application: **21.06.2023**
(21) Application number: 21306810.9
(22) Date of filing: 16.12.2021
(51) Int. Cl.: B29D 11/00

(54) **PROCESS AND DEVICE FOR MAKING A MOLD ASSEMBLY SUITABLE FOR MOLDING AN OPHTHALMIC LENS**

(71) Applicant: Essilor International, 94220 Charenton-Le-Pont (FR)
(72) Inventor: SOAVE, Pascal, 21110 Longecourt en Plaine (FR)
(74) Representative: Jacobacci Coralis Harle

(57) **Abstract**

A process for making a mold assembly (10) suitable for molding an ophthalmic lens, comprising steps of:
- providing two molding shells (200A, 200B) each having a main surface (202A, 202B) to be placed in front of each other and a peripheral edge (203A, 203B),
- providing a closing member (100) in the form of a band,
- dropping a strip of glue (300) off around at least a major part of the peripheral edge of each molding shell, and
- positioning said closing member around at least a major part of the peripheral edges of the two molding shells.

## Description

### TECHNICAL FIELD OF THE INVENTION

The present invention generally relates to the field of eyeglasses.

It more particularly relates to a process for producing a mold assembly suitable for molding an ophthalmic lens to be mounted on a spectacle frame.

### BACKGROUND INFORMATION AND PRIOR ART

A traditional mold for molding ophthalmic lenses comprises two molding shells at the periphery of which is disposed an annular closing member that defines with these shells a molding cavity.

The two molding shells are generally made of a transparent material while the closing member is made of a tape.

Such a tape is a combination of a band and glue covering a face of said band.

This tape has various technical functions.

The first one is to close the space between the molding shells, so as to keep the monomer between these shells when the mold assembly is filled of a monomer to be polymerized.

A second function is to maintain the molding shells at a distance from each other so as to give the mold assembly a determined thickness. Consequently, once polymerized, the lens can have a center thickness that corresponds to the client's prescription.

Another function consists in giving to the edge of the lens, once polymerized, a perfectly smooth aspect.

The choice of the association of a suitable band and a suitable glue is difficult to make.

The band must in fact be deformable during the polymerization process and has to give a straight edge to the lens.

The glue has to avoid quality issues during the polymerization process (component migration inside the lens, microbubbles) and during the tape peeling process. Glue chemical components are indeed able to react with the monomer and to create quality problems.

Therefore, the glue definition has to be adjusted depending on the type of used monomer.

In other words, at present, the solution consists in using various tape references each adapted to one monomer, which is expensive, impractical, and potentially problematic since the references can be mixed by mistake.

### SUMMARY OF THE INVENTION

In this context, the idea of the invention consists in separating the adhesive function of the glue and the support function of the band.

To this end, the present invention provides a process for making a mold assembly suitable for molding an ophthalmic lens, comprising steps of:
- providing two molding shells each having a main face to be placed in front of the main face of the other molding shell and a peripheral edge surrounding said main face,
- providing a closing member in the form of a band, and
- positioning said closing member around at least a major part of the peripheral edges of the two molding shells,
   wherein, before said step of positioning:
- at least one strip of glue is placed (ie applied, dropped off or squeezed) around at least a major part of the peripheral edge of each molding shell, and/or
- at least two strips of glue are placed side by side and at a distance from each other, along at least a major part of the closing member so that each strip of glue coincides with the edge of each molding shell.

Thanks to the invention, once assembled, the mold assembly has a closing member that does not exhibit any glue on the part of its internal face situated between the two molding shells. Consequently, when this assembly is filled with monomer, there is no glue zone in contact with the monomer.

Consequently, it is easier to find a glue that fulfils all the above-mentioned functions. In other words, it is possible to find a new glue that is easier to be deposited and to be removed during the peeling phase. This new glue can indeed be used whatever the monomer components.

In the same way, the band can be selected without taking into account the glue components, so that it is easier to find a band able to return a lens having an edge as straighter as possible.

Other preferred features of the invention are the following ones:
- each strip of glue extends continuously on each peripheral edge or along the closing member.
- each strip of glue is placed around at least a major part of the peripheral edge of each molding shell.
- the strip of glue extends on an angular sector around each peripheral edge of at least 270°, and preferably equal to 360°.
- only one strip of glue is placed on each peripheral edge.
- at least two strips of glue are placed on each peripheral edge, preferably in parallel to each other.
- after the step of positioning the closing member, at least one cord of glue is deposited on the closing member, along at least a first free extremity of this closing member.
- the closing member having a length longer than the circumference of the peripheral edge of each molding shell, during the step of positioning, only a part of the closing member is glued around the peripheral edges of the two molding shells so as to leave open an aperture for the filling of the mold assembly, the remainder of the closing member being glued against the peripheral edges of the two molding shells after the complete filling of the mold assembly, said remainder having a second free extremity coming into contact with said cord of glue.
- in a variant, the closing member having a length shorter than the circumference of the peripheral edge of each molding shell, during the step of positioning, the entire closing member is positioned around the peripheral edges of the two molding shells, so as to leave open an aperture for the filling of the mold assembly, after the step of positioning the closing member, at least one cord of glue is deposited on each free extremity of the closing member, and after the complete filling of the mold assembly, a seal lid is glued against the peripheral edges of the two molding shells and on each free extremity of the closing member.

The invention also relates to a mold assembly comprising:
- two molding shells each having a main face to be placed in front of the main face of the other molding shell and a peripheral edge surrounding said main face,
- a closing member in the form of a band that is glued onto said peripheral edges,
wherein said mold assembly is assembled by means of a process as defined above.

The invention also relates to a device for making a mold assembly suitable for molding ophthalmic lenses, comprising:
- a support for supporting at least one molding shell of said mold assembly,
- a supply system suitable to be activated for dispensing glue,
- a moving mechanism for moving said support relative to said supply system, and
- a processing unit programmed to make the support move relative to said supply system and for activating the supply system so as to deposit glue on a major part of the peripheral edge of the molding shell supported by said support.

Preferably, this device comprises a positioning mechanism controlled by said processing unit so as to be able to position said closing member around at least a main part of the peripheral edges of two molding shells of said mold assembly.

Preferably, said support comprises two units for simultaneously supporting two molding shells and said supply system comprises two units for simultaneously dispensing glue on said two molding shells.

### DETAILED DESCRIPTION OF EXAMPLE(S)

The following description with reference to the accompanying drawings, given by way of non-limiting example makes it clear what the invention consists in and how it can be reduced to practice.

In the accompanying drawings:
- Figure 1 is a schematic view of a first embodiment of a mold assembly according to the invention, represented after a step of positioning a closing member,
- Figure 2 is a schematic view of the mold assembly of Figure 1, represented after a step of depositing a cord of glue on the closing member,
- Figure 3 is a schematic view of a second embodiment of the mold assembly according to the invention,
- Figure 4 is a schematic view of a device for assembling the mold assembly of Figure 1, and
- Figure 5 is a schematic view of another embodiment of a mold assembly according to the invention, represented after a step of dropping the strips of glue directly on the closing member.

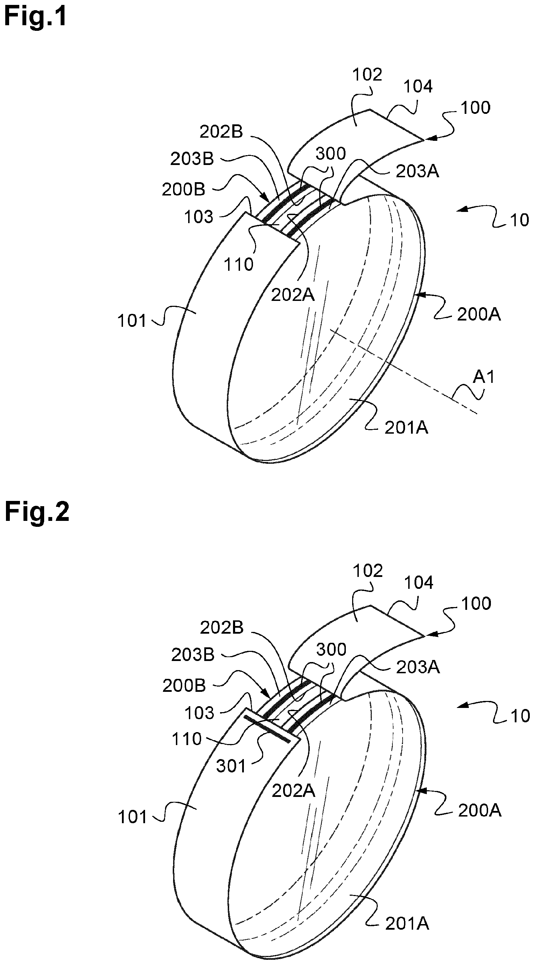

Figure 1 shows a mold assembly 10.

This mold assembly 10 comprises two molding shells 200A, 200B, an annular closing member 100 located at the periphery of these shells, and glue for sticking the closing member 100 on the shells.

Each molding shell 200A, 200B has a shape of a thick disc, with two main faces 201A, 202A, 201B, 202B and a peripheral edge 203A, 203B.

The main faces of the molding shells 200A, 200B that face to each other are named "internal faces 202A, 202B". These internal faces are curved to generate the main faces of an ophthalmic lens. One of these internal faces is here convex while the other one is here concave.

The other main faces of the molding shells 200A, 200B, named external faces 201A, 201 B, are here plane.

The peripheral edges 203A, 203B of the molding shells 200A, 200B have here a cylindrical shape of revolution about a main axis A1.

The thickness of the peripheral edges 203A, 203B is usually comprised between 3 millimeters and 7 millimeters.

The two molding shells 200A, 200B are located, during the molding process, so that their internal faces 202A, 202B face each other and so that their main axes A1 remain coincident.

The closing member 100 has a shape of a band that is wounded around at least a part of the peripheral edges of the two molding shells 200A, 200B.

This closing member maintains one molding shell at a distance from the other molding shell. Thus, the two molding shells 200A, 200B and the closing member 100 define together a molding cavity to be filled with a molding material (called hereafter "monomer"), which cavity is lens-shaped (in negative).

Consequently, the internal face of the closing member 100 presents two lateral parts to be glued on the peripheral edges 203A, 203B of the two molding shells 200A, 200B, and a central portion adapted to close the molding cavity.

This closing member 100 has a width that is the same whatever the thickness of the lens to be molded. Consequently, as shown in Figures 1 to 3, this closing member can go over the edges of the molding shells 200A, 200B.

In the first embodiment shown in Figures 1 and 2, the closing member 100 has a length longer than the circumference of the peripheral edge 203A, 203B of each molding shell 200A, 200B. Consequently, it is able to entirely close the molding cavity.

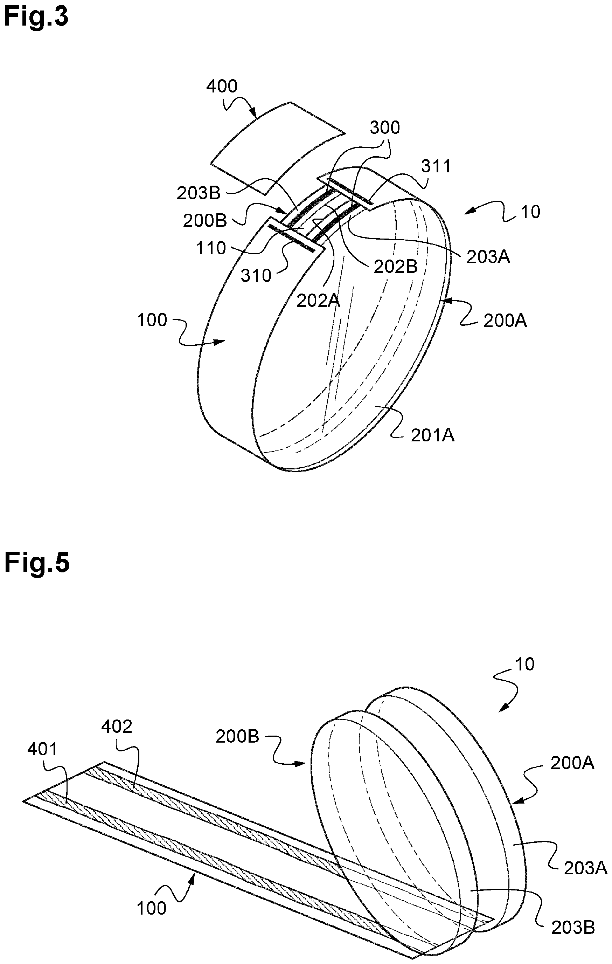

On the contrary, in the second embodiment shown in Figure 3, the closing member 100 has a length shorter than the circumference of the peripheral edge 203A, 203B of each molding shell 200A, 200B. Consequently, it is not able to entirely close the molding cavity. To this end, a seal lid 400 has to be used. Here, apart its length, this lid is identic to the closing member 100.

In both embodiments, the closing member 100 may be made of a superimposition of distinct layers of materials. More particularly, the closing member 100 may be made of at least a first layer made of fluorosilicone, a second layer made of polyester and a third layer made of silicone.

In another embodiment, the closing member 100 may be a monolayer made for example of polyester.

The glue used to stick this closing member on the peripheral edges 203A, 203B of the two molding shells 200A, 200B is preferably a glue made of silicone or any other type of glue that could be easily peeled off from the peripheral edge of each molding shell at a temperature of 120 °C to 130 °C.

This mold assembly 10 is assembled thanks to a device 1000.

This device can be distinct from the one used for filling the molding cavity with monomer or it can belong to the latter. Here, this device is distinct from the device for filling the molding cavity.

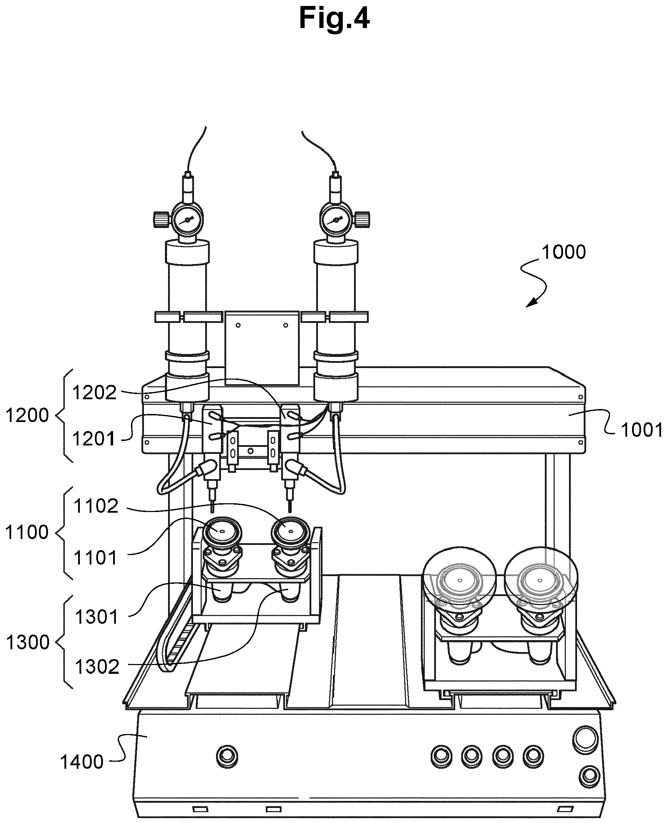

As shown in Figure 4, this device 1000 comprises:
- a frame 1001,
- a support 1100 for supporting the molding shells 200A, 200B,
- a supply system 1200 suitable to be activated for dispensing glue,
- moving means 1300 for moving said support 1100 relative to said supply system 1200, and
- a processing unit 1400.

Here, the frame 1001 comprises a bottom plate and a structure in the shape of an arch that raises from this bottom plate, with two lateral pillars and a cross bar supported at its ends by the pillars.

The support 1100 comprises two units 1101, 1102 parallel to each other and mounted on a cradle lying on the bottom wall.

Each unit 1101, 1102 comprises a spindle and, at the free extremity of this spindle, an end piece suitable for fastening one of the molding shells 200A, 200B (for instance by means of glue).

The moving means 1300 here comprise two motors that are suitable for making the two spindles rotate about the mains axes A1 of the molding shells 200A, 200B.

The supply system 1200 comprises two units 1201, 1202, each having a nozzle mounted on the cross bar of the frame 1001 so as to be located above the end piece of a corresponding spindle. Consequently, each nozzle is able to deposit glue on the peripheral edge 203A, 203B of the molding shell 200A, 200B supported by this spindle. Each unit 1201, 1202 also comprises a pump connected to the nozzle by a feeding line and adapted to suck glue in a common tank (not represented in Figure 4).

The processing unit 1400 comprises first a Machine Man Interface. As shown in Figure 4, this interface comprises a front plate having various openings, and buttons located through the openings.

It also comprises a processor, a memory and various input and output interfaces. In a variant, it could comprise a programmable logic device (DSP, FGPA...).

Thanks to its input interfaces, the processing unit is suitable for receiving instructions from the Machine Man Interface.

Thanks to its output interfaces, the processing unit is suitable for activating or disactivating the pumps of the supply system 1200 and the motors of the moving means 1300.

Thanks to its memory, the processing unit stores a computer application, consisting of computer programs comprising instructions, the execution of which by the processor enables the processing unit to implement the process described below.

At this step, we can note that the device 1000 does not comprise means for placing the closing member around the peripheral edges of two molding shells. Indeed, it is well known to integrate such means in the device that is designed to fill the mold assembly with monomer. Such a device is for instance described in document JP2006272576.

But in a variant, such means could be integrated to the device 1000 shown in Figure 1.

The process for assembling the mold assembly 10 and for manufacturing a lens by means of this mold assembly can now be described.

The first step consists in selecting two molding shells 200A, 200B having internal surfaces 202A, 202B that suit with the client's prescription, and to determine a gap corresponding to this prescription (this gap corresponding to the center thickness of the lens to be molded).

The second step consists in securing these two molding shells 200A, 200B to the end pieces of the spindles, by their external faces.

The third step consists in dropping a strip of glue 300 off around the peripheral edge 203A, 203B of each molding shell 200A, 200B.

To this end, the motors are driven to make the shells turn about their main axes A1 and the pumps are activated to make the glue fall on the peripheral edges 203A, 203B of the molding shells 200A, 200B.

When the shells have made a complete revolution, the pumps are disactivated and the motors are stopped.

Here, the strip of glue 300 extends continuously on the entire peripheral edge 203A, 203B of each molding shell 200A, 200B.

But in a variant, it would be possible to make the glue fall drop by drop. In this variant, the drops would be located near each other so that, once the closing member 100 wrapped around the shells, these drops crush and come in contact with each other.

In another variant, it would be possible to deposit the strips of glue 300 on only a part of the peripheral edge 203A, 203B of each molding shell 200A, 200B, on an angular sector of at least 270°. Indeed, the closing member needs first to be stuck on only a part of the peripheral edges 203A, 203B of the molding shell 200A, 200B, to delimit an opening 110 enabling the filling of the molding cavity. In this variant, no glue is deposited on the areas of the peripheral edges 203A, 203B that are located on both sides of the opening 110.

In the shown embodiment, only one strip of glue 300 is placed on each peripheral edge 203A, 203B, at mid-thickness of the latter. In a variant, two strips of glue (or more) may be deposited on each peripheral edge 203A, 203B, preferably in parallel to each other.

Here, each strip of glue presents a width of about 1 millimeter (mm) to 2.5 mm and a height of about 0.5 mm.

The fourth step consists in positioning the closing member 100 around the peripheral edges 203A, 203B of the two molding shells 200A, 200B.

To this end, the two molding shells 200A, 200B are placed in front of each other, at a distance from each other that depends on the determined gap.

Then, a first extremity of the closing member 100 is stuck on both peripheral edges 203A, 203B.

After, the two molding shells 200A, 200B are rotatably driven about their main axes A1 so that the closing member 100 wraps around these peripheral edges 203A, 203B.

In the first embodiment shown in Figures 1 and 2, the rotation is stopped before the molding shells 200A, 200B have made a complete revolution.

Consequently, at this step, as shown in Figure 1, only a main part 101 of the closing member 100 is stuck on these shells. The remainder 102 is maintained at a distance from the shells so as not to come into contact with the strips of glue 300 (in order to leave the opening 110 open).

Then, the molding cavity is filled with monomer, for instance by means of a device as that described in document EP2889113.

After, as shown in Figure 2, a cord of glue 301 is deposited on the external face of the closing member 100, along its first free extremity 103 (see Figure 2).

On the represented embodiment, this cord of glue 301 is straight but in a variant, it may have a U-shape so that its extremities come into contact with the strips of glue 300.

Then, the remainder 102 of the closing member 100 is pushed against the peripheral edges 203A, 203B of the two molding shells 200A, 200B, so that the second free extremity 104 of the closing member 100 comes into contact with the cord of glue 301.

At this step, the molding cavity is sealed and the molding assembly 10 can be placed in a polymerization unit, so as to generate the ophthalmic lens.

When the lens is polymerized, the closing member is pelt off and the shells are separated from each other and from the molded ophthalmic lens.

In the second embodiment shown in Figure 3, the rotation is stopped when the closing member 100 is entirely stuck onto the molding shells 200A, 200B.

Consequently, at this step, the opening 110 is delimited between the two free extremities of the closing member 100.

Next, the molding cavity is filled with monomer.

Then, two cords of glue 310, 311 are deposited on the external face of the closing member 100, along its free extremities.

Here again, on the represented embodiment, these cords of glue 310, 311 are straight but in a variant, they may have a U-shape so that their extremities come into contact with the strips of glue 300 to form a closed outline (here a rectangle).

Then, the seal lid 400 is pushed against the peripheral edges 203A, 203B of the two molding shells 200A, 200B, so as to come into contact with the cords of glue 310, 311 and the strips of glue 300.

At this step, the molding cavity is sealed and the molding assembly 10 can be placed in a polymerization unit, so as to generate the ophthalmic lens.

The present invention is in no way limited to the embodiment described and shown.

For instance, the cord(s) of glue could be deposited on the external face of the closing member before the filling of the molding cavity with monomer.

In another variant shown in Figure 5, the strips of glue 401, 402 may be dropped directly on the closing member 100, at a distance from each other and side by side, so that each strip of glue coincides with the edge of each molding shell (i.e.: when the closing member is put around the molding shells, each strip of glue entirely applies around the edge of a corresponding molding shell).

In this variant, the two strips of glue 401, 402 may be deposited so as to be parallel, but in alternative, each strip of glue could have a wave-shape bordering each side of the closing member.

## Claims

1. Process for making a mold assembly (10) suitable for molding an ophthalmic lens, comprising the steps of:
- providing two molding shells (200A, 200B) each having a main face (202A, 202B) to be placed in front of the main face (202A, 202B) of the other molding shell (200A, 200B) and a peripheral edge (203A, 203B) surrounding said main face (202A, 202B),
- providing a closing member (100) in the form of a band, and
- positioning said closing member (100) around at least a major part of the peripheral edges (203A, 203B) of the two molding shells (200A, 200B), **characterized in that**, before said step of positioning:
- at least one strip of glue (300) is placed around at least a major part of the peripheral edge (203A, 203B) of each molding shell (200A, 200B), and/or
- at least two strips of glue (401, 402) are placed side by side and at a distance from each other, along at least a major part of the closing member (100) so that each strip of glue coincides with the peripheral edge (203A, 203B) of each molding shell (200A, 200B).

2. Process according to claim 1, wherein each strip of glue (300, 401, 402) extends continuously on each peripheral edge (203A, 203B) or along the closing member (100).

3. Process according to any one of the preceding claims, wherein each strip of glue (300) is placed around at least a major part of the peripheral edge (203A, 203B) of each molding shell (200A, 200B).

4. Process according to claim 3, wherein the strip of glue (300) extends on an angular sector around each peripheral edge of at least 270°, and preferably equal to 360°.

5. Process according to any one of claims 3 and 4, wherein only one strip of glue (300) is placed on each peripheral edge (203A, 203B).

6. Process according to any one of claims 3 and 4, wherein at least two strips of glue (300) are placed on each peripheral edge (203A, 203B), preferably in parallel to each other.

7. Process according to any one of the preceding claims, wherein, after the step of positioning the closing member (100), at least one cord of glue (301) is deposited on the closing member (100), along at least a first free extremity (103) of this closing member (100).

8. Process according to claim 7, wherein:
- the closing member (100) having a length longer than the circumference of the peripheral edge (203A, 203B) of each molding shell (200A, 200B),
- during the step of positioning, only a part (101) of the closing member (100) is glued around the peripheral edges (203A, 203B) of the two molding shells (200A, 200B) so as to leave open an aperture (110) for the filling of the mold assembly (10),
- the remainder (102) of the closing member (100) being glued against the peripheral edges (203A, 203B) of the two molding shells (200A, 200B) after the complete filling of the mold assembly (10), said remainder (102) having a second free extremity (104) coming into contact with said cord of glue (301).

9. Process according to claim 7, wherein:
- the closing member (100) having a length shorter than the circumference of the peripheral edge (203A, 203B) of each molding shell (200A, 200B),
- during the step of positioning, the entire closing member (100) is positioned around the peripheral edges (203A, 203B) of the two molding shells (200A, 200B), so as to leave open an aperture (110) for the filling of the mold assembly (10),
- after the step of positioning the closing member (100), at least one cord of glue (310, 311) is deposited on each free extremity of the closing member (100), and
- after the complete filling of the mold assembly, a seal lid (400) is glued against the peripheral edges (203A, 203B) of the two molding shells (200A, 200B) and on each free extremity of the closing member (100).

10. Mold assembly (10) comprising:
- two molding shells (200A, 200B) each having a main face (202A, 202B) to be placed in front of the main face (202A, 202B) of the other molding shell (200A, 200B) and a peripheral edge (203A, 203B) surrounding said main face (202A, 202B),
- a closing member (100) in the form of a band that is glued onto said peripheral edges (203A, 203B),
**characterized in that** said mold assembly (10) is assembled by means of a process according to any one of the preceding claims.

11. Device (1000) for making a mold assembly (10) suitable for molding ophthalmic lenses, comprising:
- a support (1100) for supporting at least one molding shell (200A, 200B) of said mold assembly (10),
- a supply system (1200) suitable to be activated for dispensing glue,
- a moving mechanism (1300) for moving said support (1100) relative to said supply system (1200), and
- a processing unit (1400) programmed to make the support (1100) move relative to said supply system (1200) and for activating the supply system (1200) so as to deposit glue on a major part of the peripheral edge (203A, 203B) of the molding shell (200A, 200B) supported by said support (1100).

12. Device (1000) according to claim 11, comprising a positioning mechanism controlled by said processing unit (1400) so as to be able to position said closing member (100) around at least a main part of the peripheral edges (203A, 203B) of two molding shells (200A, 200B) of said mold assembly (10).

13. Device (1000) according to any one of claims 11 and 12, wherein said support (1100) comprises two units (1101, 1102) for simultaneously supporting two molding shells (200A, 200B) and said supply system (1200) comprises two units (1201, 1202) for simultaneously dispensing glue on said two molding shells (200A, 200B).
